# EUROPEAN PATENT SPECIFICATION

(11) **EP 1 403 177 B1**
(45) Date of publication and mention of the grant of the patent: **23.12.2009**
(21) Application number: 03021569.3
(22) Date of filing: 24.09.2003
(51) Int. Cl.: B62K 11/04

(54) **Vehicle body frame for a motorcycle**
Rahmen für ein Motorrad
Cadre pour motocyclette

(30) Priority: 24.09.2002 JP 2002276909
(43) Date of publication of application: 31.03.2004
(73) Proprietor: Yamaha Hatsudoki Kabushiki Kaisha, Iwata-shi, Shizuoka-ken (JP)
(72) Inventor: Kawase, Masao, Iwata-shi Shizuoka-ken (JP); Kanou, Yasunobu, Iwata-shi Shizuoka-ken (JP)
(74) Representative: Grünecker, Kinkeldey, Stockmair & Schwanhäusser Anwaltssozietät

(56) References cited:
- EP-A2- 1 081 037
- GB-A- 2 229 407
- JP-A- 4 055 185
- JP-A- 5 069 873
- US-A- 4 696 363

## Description

The present invention relates to a vehicle body frame for a motorcycle.

Prior art document JP 04 055185 teaches a vehicle body frame for a motorcycle comprising a head pipe and a pair of left and right rails extending from said head pipe. A pair of left and right rear brackets are connected to each other by means of an upper and lower cross member for connecting the upper and lower portion of the rear bracket. The upper parts of the rear brackets are connected to the left and right rails by means of connecting elements, wherein said elements are attached to the arm rails and the brackets by screws, respectively. Furthermore, said vehicle body frame is provided with attaching means adapted for attaching the engine into said body frame.

Prior art document EP 1 081 037 A2 teaches a body frame for a motorcycle which includes a front frame on which an engine is mounted and a rear frame connected to a rear end portion of the front frame. A head pipe is provided at a front frame end of the front frame. In order to assemble said body frame, the head pipe, the front frame, and the rear frame are connected by welding.

Conventionally, there is a vehicle body frame for a motorcycle formed by casting disclosed in, for example, JP-A-62-31576 or JP-A-63-315 387, mentioned later. The vehicle body frame shown in the literatures is integrally formed with a head pipe pivotably supporting a front wheel and a front fork, a pair of left and right tank rails extended from the head pipe in a rear lower direction on an upper side of an engine and rear arm brackets extended in a lower direction from rear end portions of the tank rails for rockably supporting rear arms for supporting a rear wheel in an up and down direction by casting. The rear arm brackets are integrally formed with a cross member for connecting the rear arm bracket on the left side of the vehicle body and the rear arm bracket on the right side of the vehicle body.

When all of essential portions of the vehicle body frame are going to be molded integrally, not only a mold is enlarged but also in the case of the vehicle body frame having a complicated shape, many slide molds need to use and a structure of a casting facility becomes complicated and therefore, production cost is significantly increased.

In order to resolve such a drawback, there is a vehicle body frame formed by being divided into a plurality of frame members such that a cast portion is downsized, disclosed in, for example, JP-A-5-69873 and JP-B-5-81476, mentioned later.

According to the vehicle body frame shown in JP-A-5-69873, a head pipe and half portions of tank rails on a front side of the vehicle body are integrally formed by casting and the vehicle body frame is formed by welding half portions of the tank rails on a rear side of the vehicle body to a rear end portion of the cast product and welding rear arm brackets to rear end portions of the tank rails. However, according to the vehicle body frame, the tank rails are divided in a front and rear direction, the number of weld portions is large and therefore, there is a limit in reducing production cost.

According to a vehicle body frame shown in JP-B-5-81476, a pair of left and right rear arm brackets and a cross member for connecting the rear arm brackets are integrally formed by casting and a front frame is fixed to the cast product by a fixing bolt. The front frame is provided with a head pipe, a pair of left and right tank rails and a down frame extended from the head pipe in a rear lower direction on a lower side of the tank rails and the front frame is assembled by combining a half portion on a left side of the vehicle body and a half portion on a right side of the vehicle body formed by casting and fastening the halves by a bolt. In the vehicle body frame, frame members formed by casting are fastened by the bolt, a number of assembling steps are increased and therefore the production cost cannot necessarily be reduced.

There is a vehicle body frame constituted to be able to reduce production cost by resolving the above-described drawback of the vehicle body frame disclosed in, for example, JP-UM-B-6-3752. The vehicle body frame shown in JP-UM-B-6-3752 is formed by dividing the vehicle body frame to a front frame and a rear frame, and a front end portion of the rear frame is welded to a rear end portion of the front frame.

The front frame is integrally formed with a head pipe, a pair of left and right tank rails and a cross member for connecting rear end portions of the tank rails by casting. The rear frame is integrally formed with a pair of left and right rear arm brackets and a cross member for connecting lower end portions of the rear arm brackets by casting.

According to the vehicle body frame, the vehicle body frame is formed by welding together two of cast products (front frame and rear frame) and therefore, the number of weld portions is small, further, a bolt is not used for assembling and therefore, production cost can be reduced.

The rear frame is formed in channel-like shape opened to an upper side in view from a rear side thereof and in forming the rear frame by casting, in order to equalize casting conditions of the left and right rear arm brackets, a molten metal needs to inject from upper end portions of the left and right rear brackets. That is, the rear frame is cast by forming a runner portion at a casting mold such that cavities for molding the left and right rear arm brackets are connected and by supplying a molten metal from the runner portion to both of the cavities.

However, when the rear frame is cast as described above, an extra portion is formed by solidifying the molten metal in the runner portion and therefore, the extra portion needs to cut after casting. The extra portion is disposed at a vicinity of a portion at which a rear wheel driving chain passes and therefore, in cutting the extra portion, finishing operation needs to carry out with high accuracy for inner side faces of the rear arm brackets after cutting. This is for preventing the chain from being brought into contact with a portion for constituting a mark of cutting the extra portion. Therefore, in the vehicle body frame described in JP-UM-B-6-3752, mentioned above, the finishing operation needs to carry out as described above after casting and therefore, there poses a problem of amounting to an increase in cost.

It is an object of the present invention to provide a vehicle body frame for a motorcycle that would be high in strength but also low in weight and can be made at low costs.

According to the present invention, said objective is solved by a vehicle body frame for a motorcycle having the features of independent claim 1.

Accordingly, it is provided a vehicle body frame for a motorcycle comprising a head pipe, a pair of left and right tank rails extended from said head pipe, a pair of left and right rear arm brackets, wherein said head pipe and said pair of left and right tank rails are integrally formed by casting, and rear end portions of said tank rails are welded to front end portions of said rear arm brackets, and wherein said pair of rear arm brackets and a first cross member for connecting upper end portions of said rear arm brackets are integrally formed by casting.

According to a preferred embodiment, said first cross member is placed adjacent to a welding position of said rear end portions of said tank rails and said front end portions of said rear arm brackets.

Thus, said first cross member does not interfere with a part of the vehicle body at which the rear wheel driving chain passes, so that auxiliary processing of said first member, for example cutting a part of said first cross member and finishing operation the cut surface, is superfluous and production cost can be reduced.

According to still another preferred embodiment, said head pipe and said pair of left and right tank rails form a front frame, said front frame further consists of plate members comprising outer and inner walls, outer side and inner side plates, upper and lower plates, and hole wall plates, wherein said front frame is integrally formed by casting.

According to a further preferred embodiment, said pair of rear arm brackets and said first cross member for connecting upper end portions of said rear arm brackets form a rear frame, said rear frame further consists of plate members comprising outer side and inner side plates, front and rear walls and a second cross member for connecting lower end portions of said rear arm brackets, wherein said rear frame is integrally formed by casting.

Since, said front frame and said rear frame consist of plate members and are integrally formed by casting, respectively, flow properties by the casting operation of the same are improved so that a provision of extra portions for the casting operation, for example auxiliary casting channels, and auxiliary processing thereof are avoided.

According to a further preferred embodiment, frontward extended portions extended to said tank rails are provided at upper end portions of said rear arm brackets and front end portions of said frontward extended portions are welded to said rear end portions of said tank rails.

According to still a further preferred embodiment, brackets connected with links for a rear cushion unit are provided to said second cross member, and a bracket connected with an upper end portion of said rear cushion unit is connected to said first cross member connecting upper end portions of said rear arm brackets.

According to a further preferred embodiment, an extra portion solidifies at a runner portion communicating with a gate of a casting mold and is cut at portions thereof after welding said rear frame to said front frame at said extra portion.

According to a further preferred embodiment, brackets for supporting a fuel tank are formed by remaining portions of said rear end portions of said tank rails at which said extra portion is cut.

According to a further preferred embodiment, a total length of said front frame is substantially equal to a total length of said rear frame.

Thus, the casting molds of the front frame and of the rear frame are substantially of the same size, so that a single casting facility can be used for both casting molds.

Further preferred embodiments of the present invention are laid down in the further subclaims.

In the following, the present invention is explained in greater detail by means of several embodiments thereof in conjunction with the accompanying drawings, wherein:
- Fig. 1: is a side view of a vehicle body frame for a motorcycle according to the invention;
- Fig. 2: is a plane view showing an outline shape of a front frame,
- Fig. 3: is a side view showing to enlarge an engine mounting portion;
- Fig. 4: is a side view of the front frame;
- Fig. 5: is a side view of a rear frame;
- Fig. 6: is a front view of the rear frame;
- Fig. 7: is a vertical sectional view of a top tube portion;
- Fig. 8: is a sectional view taken along a line VIII-VIII of Fig. 4;
- Fig. 9: is a sectional view taken along a line IX-IX of Fig. 4;
- Fig. 10: is a sectional view taken along a line X-X of Fig. 4;
- Fig. 11: is a sectional view taken along a line XI-XI of Fig. 5;
- Fig. 12: is a sectional view taken along a line XII-XII of Fig. 6;
- Fig. 13: is a sectional view taken along a line XIII-XIII of Fig. 6;
- Fig. 14: is a sectional view taken along a line XIV-XIV of Fig. 5;
- Fig. 15: is a side view of an engine connecting member:
- Fig. 16: is a sectional view taken along a line XVI-XVI of Fig. 15;
- Fig. 17: is a sectional view taken along a line XVII-XVII of Fig. 3;
- Fig. 18: is a sectional view taken along a line XVIII-XVIII of Fig. 3; and
- Fig. 19: is a sectional view taken along a line XIX-XIX of Fig. 3.

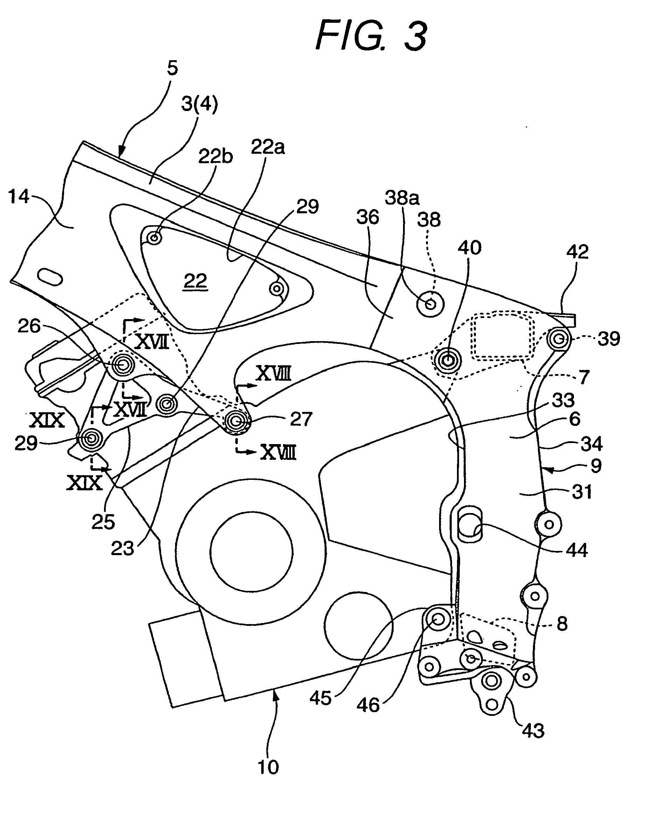

In the drawings, notation 1 designates a vehicle body frame for a motorcycle according to the embodiment. The vehicle body frame 1 is of a so-to-speak diamond type including a front frame 5 comprising a head pipe 2 and a pair of left and right tank rails 3, 4, and a rear frame 9 comprising rear arm brackets 6 and upper and lower cross members 7, 8 and is constituted to utilize an engine 10 (refer to Fig. 3) mounted to the frame members also as a strength member.

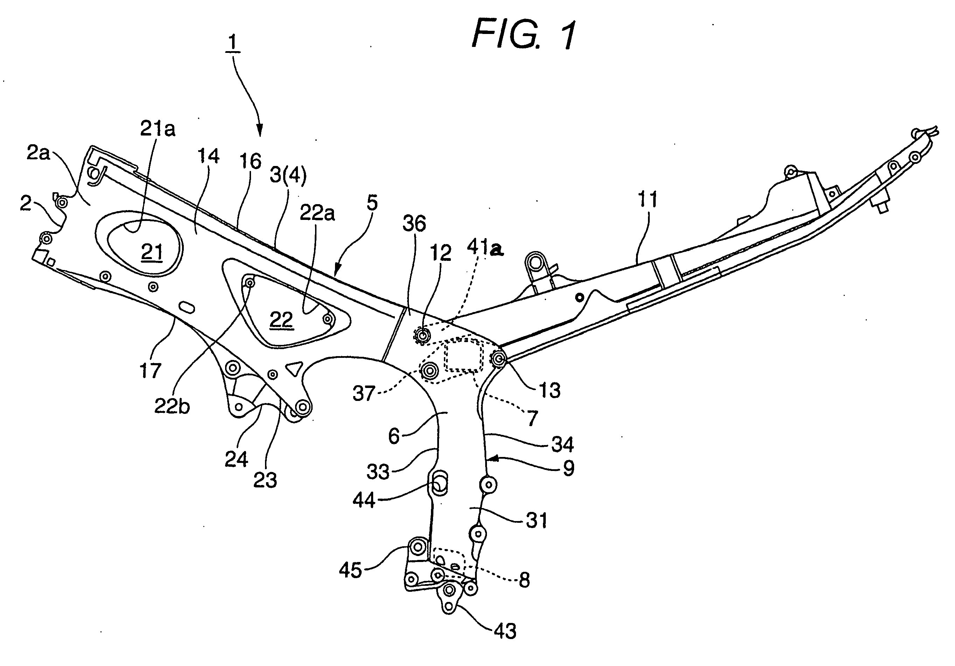

As shown by Fig. 1, the rear frame 9 is attached with a rear frame 11 by fixing bolts 12, 13.

The front frame 5 and rear frame 9 are respectively molded by casting using a mold with an aluminum alloy as a material and bonded together by welding after casting. AC4C material is used as a material of the two frame members.

The mold for molding the front frame 5 is constituted by a main mold divided in an up and down direction of the front frame 5, a slide mold provided to the molds movably in a vehicle width direction, a core for molding a hollow portion and the like, although not illustrated. Meanwhile, a mold for molding the rear frame 9 is constituted by a main mold divided in a front and rear direction of the vehicle, a slide mold provided to the molds movably in the vehicle width direction, a core for molding a hollow portion and the like.

As shown by Figs. 1, 2 and Fig. 4, the front frame 5 is integrally formed with the head pipe 2, the tank rail 3 on the left side of the vehicle body and the tank rail 4 on the right side of the vehicle body extended in a rear lower direction from the head pipe 2.

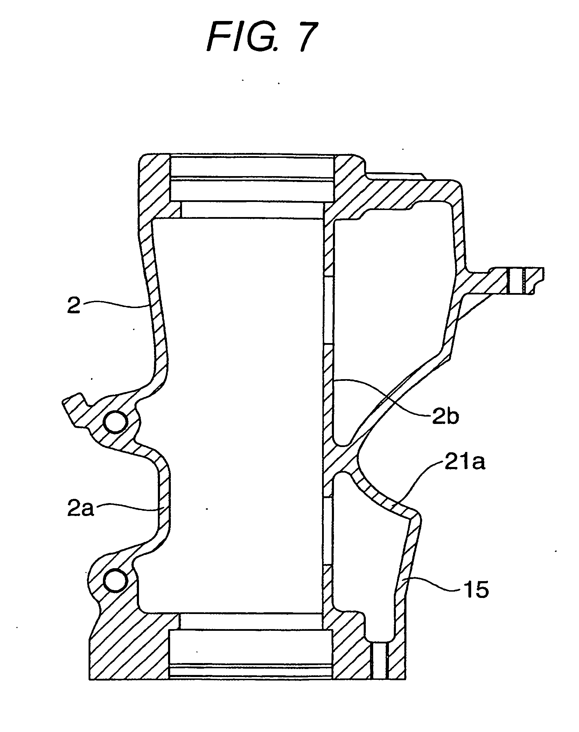

The head pipe 2 is formed by an outer wall 2a continuous to outside plates 14 (walls on outer sides of vehicle body) of the tank rails 3, 4 and an inner wall 2b disposed at inner portions of the tank rails 3, 4 (refer to Fig. 7).

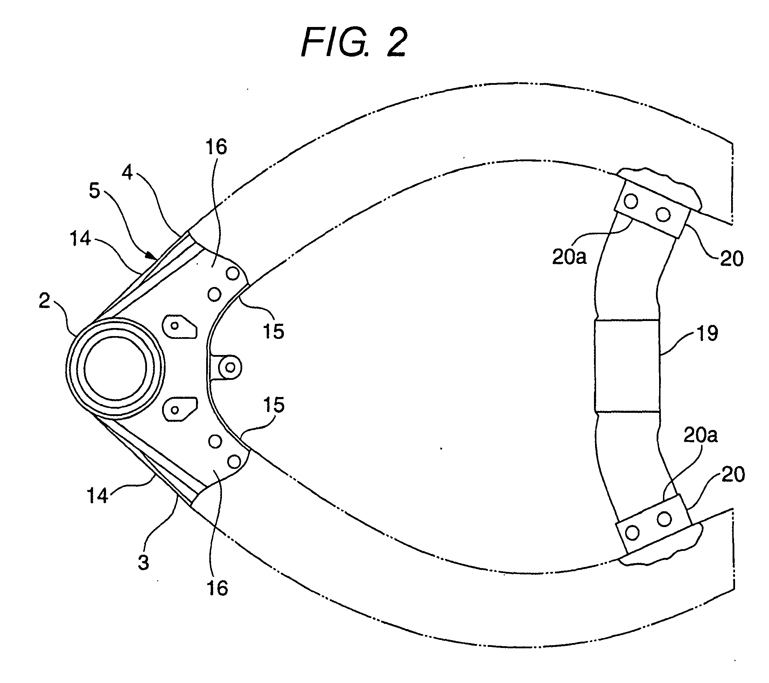

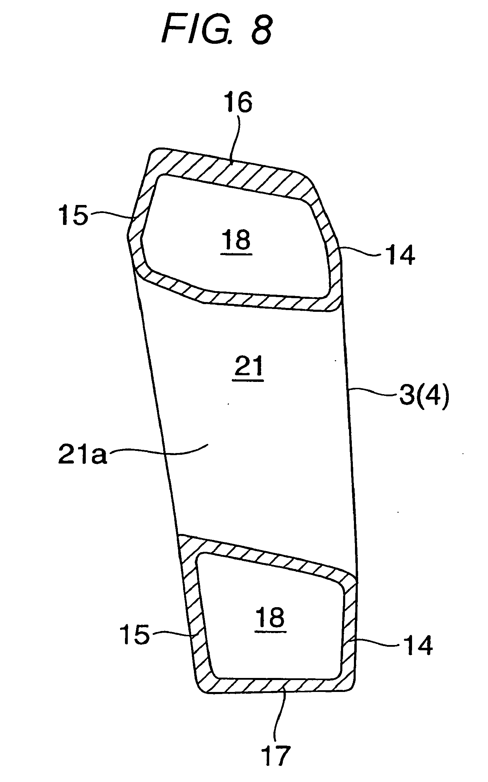

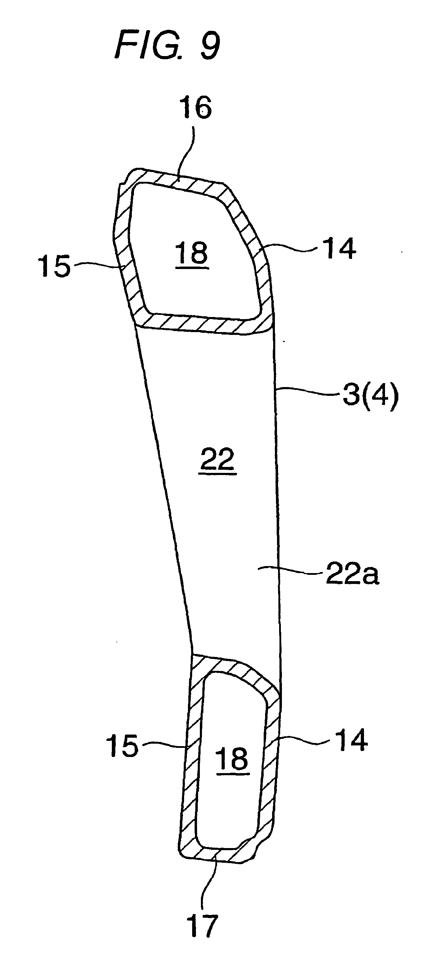

The tank rail 3 on the left side of the vehicle body and the tank rail 4 on the right side of the vehicle body each is formed to show a quadrangular sectional shape having a hollow portion 18 (refer to Figs. 8, 9) by the outer side plate 14, an inner side plate 15 on an inner side of the vehicle body, an upper plate 16 and a lower plate 17 are constituted to make a pair in a left and right direction by connecting end portion thereof on a front side of the vehicle body to the head pipe 2, as shown by Fig. 2. A member designated by notation 19 for connecting rear end portions of the two tank rails 3, 4 in Fig. 2 is an extra portion solidified at a runner portion (runner) for guiding a molten metal to cavities of the mold for molding the front frame. The runner portion is formed to extend from end faces 20a of fuel tank supporting brackets 20 on an inner side of the vehicle body provided at the inner side plates 15 of the tank rails 3, 4. That is, the mold for molding the front frame is formed with gates at portions of the brackets 20 for constituting the end faces 20a.

The extra portion 19 is cut at portions thereof in correspondence with the gates (the end faces 20a of the fuel tank supporting brackets 20) after welding the rear frame 9 to the front frame 5. Therefore, the extra portion 19 can be cut at locations remote from the tank rails 3, 4 on the inner sides of the vehicle body by a length of the bracket 20 and cutting operation can be carried out in a state in which a cutting tool is not brought into contact with the tank rails 3, 4. Therefore, the cutting operation can easily be carried out.

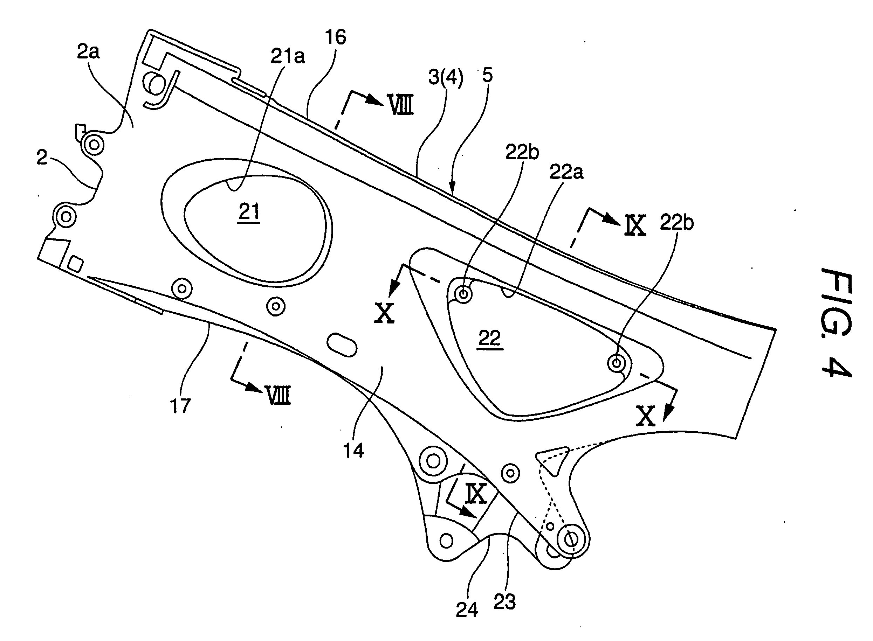

Further, as shown by Fig. 1 and Fig. 4, the tank rails 3, 4 are formed with through holes 21, 22 at front portions and rear portions thereof. As shown by Fig. 8 through Fig. 10, the through holes 21, 22 are surrounded by hole wall plates 21a, 22a extended to the inner side plates 15 by penetrating from the outside plates 14 through the tank rails 3, 4 such that respective inner portions of the tank rails 3, 4 are not exposed. Further, although Fig. 8 through Fig. 10 show the tank rail 3 on the left side of the vehicle body, a similar structure is adopted for the tank rail 4 on the right side of the vehicle body.

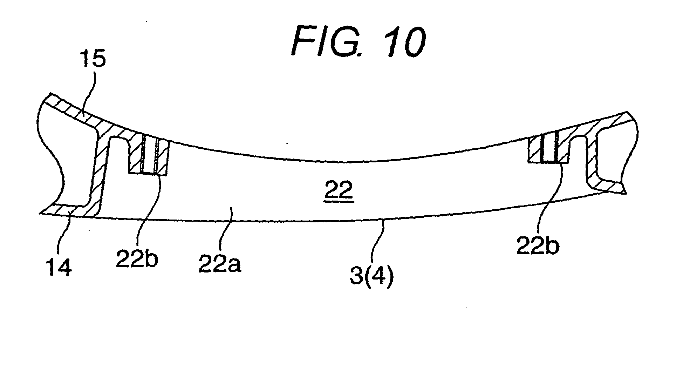

By providing the hole wall plates 21a, 22a at the tank rails 3, 4 in this way, the hole wall plates 21a, 22a function as cross members for connecting the outer side plate 14 and the inner side plate 15 and rigidities of the tank rails 3, 4 can be promoted. A member designated by notation 22b provided to face inside of the through hole 22 in Fig. 10 is a boss for attaching a cover (not illustrated) for closing an opening portion of the through hole 22.

Further, as shown by Fig. 7, an end portion on a front side of the vehicle body and a central portion in an up and down direction of the hole wall plate 21a of the through hole 21 on the front side of the vehicle body, is connected to the inner wall 2b of the head pipe 2. Therefore, the head pipe 2 is supported by the tank rail 3, 4 at both end portions and a central portion, in the up and down direction thereof and therefore, the head pipe 2 can solidly be supported.

As shown by Figs. 1, 3 and 4, lower portions of the tank rails 3, 4 are integrally formed with brackets 23, 24 for attaching a front portion of the engine 10. As shown by Fig. 3, the bracket 23 provided at the tank rail 3 on the left side of the vehicle body is connected with the engine 10 via an engine connecting member 25 and the bracket 24 provided at the tank rail 4 on the right side of the vehicle body is attached with the engine 10 by a fixing bolt, not illustrated.

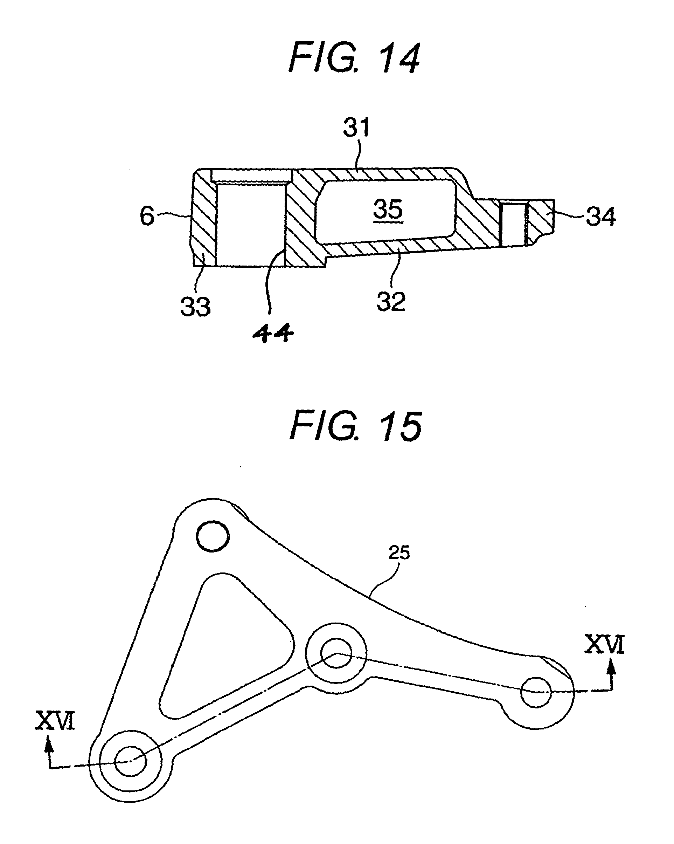

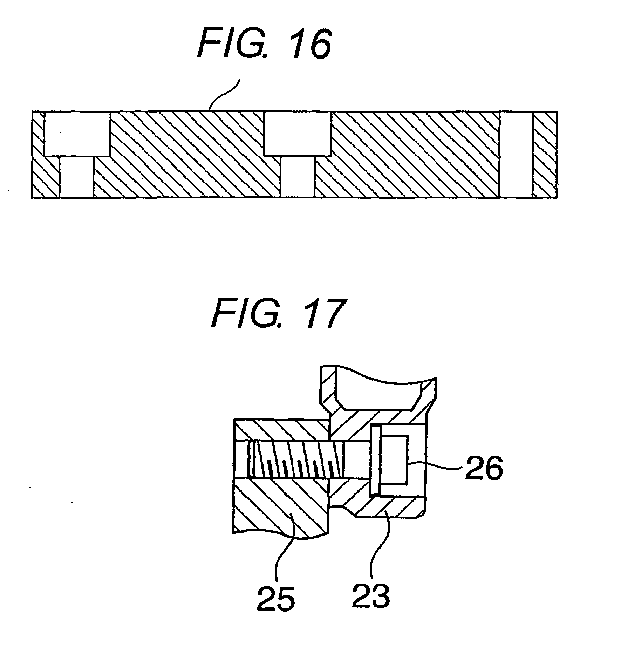

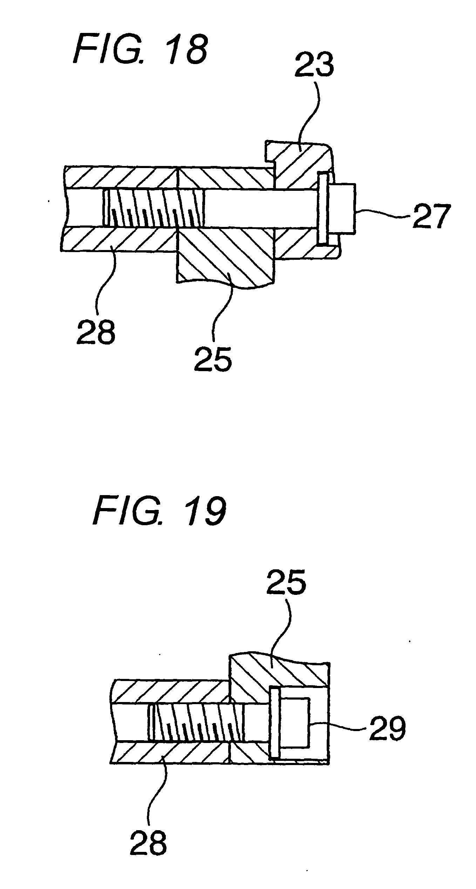

The engine connecting members 25 are for connecting the engine 10 with suitable rigidity to the tank rails 3, 4, formed by cutting an extruded material extruded in a shape as shown by Fig. 3 and Fig. 15 by a predetermined thickness, fixed to the brackets 23 by two pieces of fixing bolts 26, 27 and connected to the engine 10 at three locations at lower portions thereof. As shown by Fig. 17, on the front side of the vehicle body in the two pieces of the fixing bolts 26, 27 are fixed, the one fixing bolt 26 is fixed with the connecting member 25 on the inner side of the vehicle body of the bracket 23 and as shown by Fig. 18, the other fixing bolt 27 is fixed with the connecting member 25 on the inner side of the vehicle body of the bracket 23 and fixed with a connecting boss 28 of the engine 10 on the inner side of the vehicle body of the connecting member 25. As shown by Fig. 19, other connecting portions at two locations excluding the connecting portion by the fixing bolt 27 in connecting portions of the three locations between the connecting member 25 and the engine 10, are fixed with the connecting bosses 28 of the engine 10 on the inner side of the vehicle body of the connecting member 25 by a fixing bolt 29.

The connecting member 25 is formed by an extruded material since a number of the connecting members 25 are divided from one piece of the extruded material and in producing the large quantity of the connecting members 25, the quality (rigidity) can be made uniform.

In order to determine a final shape and dimensions of the connecting member 25, the final shape and dimensions are determined by preparing a number of test pieces having different shapes and dimensions formed by machining and selecting the most suitable one from the test pieces by a test. One of reason of forming the connecting member 25 not by casting but by an extruded product is not simply that the extruded product is suitable for mass production but that qualities of the test pieces formed by machining and a product comprising the extruded product become substantially the same and a difference therebetween in running performance as the vehicle body is hardly brought about. Further, although further reduction in cost can be achieved by molding the connecting member 25 by casting, in this case, whereas a test piece is molded by a sand mold, a product is molded by a die mold, materials having different properties need to use for the sand mold and die mold, a casting condition differs in casting the both and the rigidity is changed. That is, a product molded by the sand mold and a product molded by the die mold bring about a difference in running performance and therefore, according to the embodiment, the connecting member 25 is formed by the extruded material.

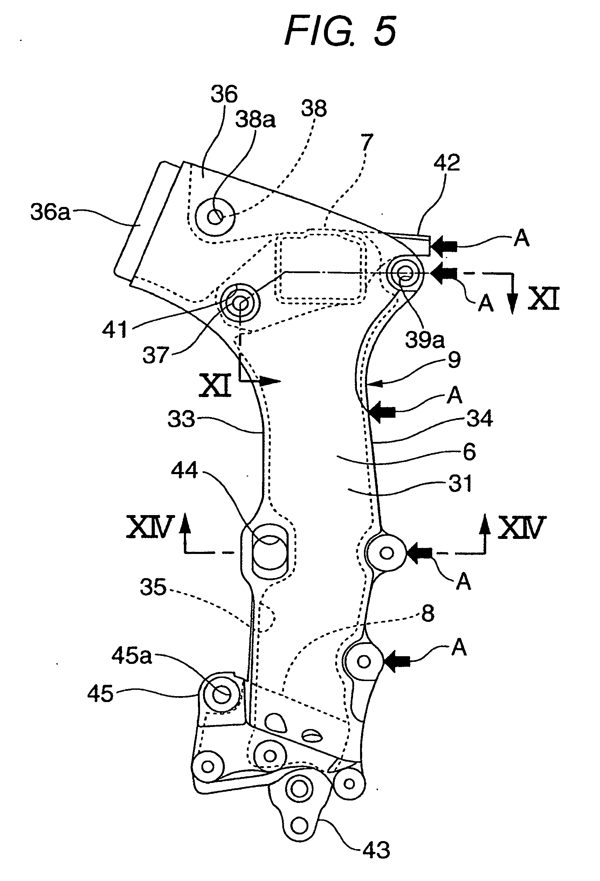

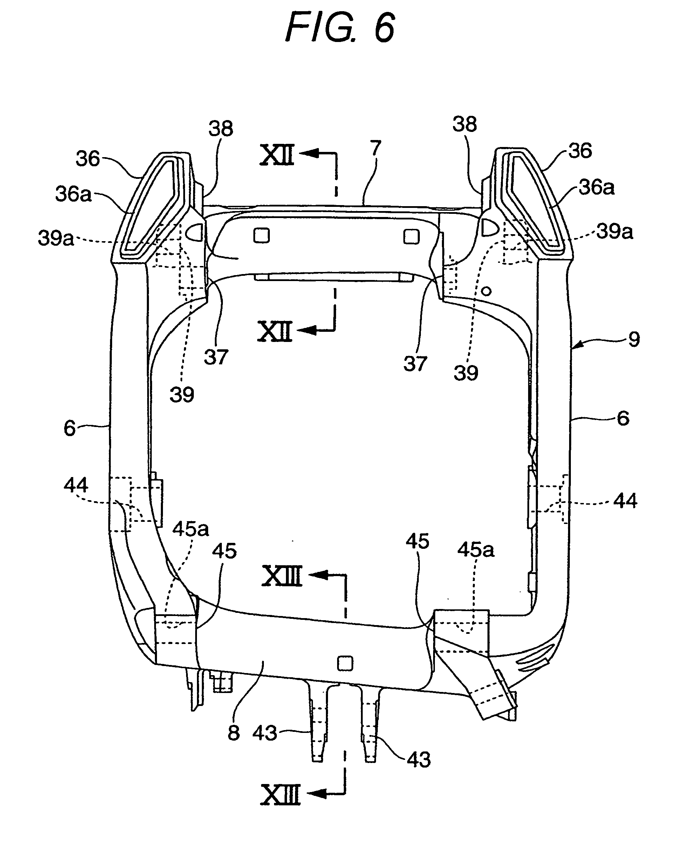

As shown by Fig. 5 and Fig. 6, the rear frame 9 is integrally formed with the pair of left and right rear arm brackets 6, 6, the upper cross member 7 connecting upper end portions of the rear arm brackets 6, 6, and the lower cross member 8 for connecting lower end portions of the rear arm brackets 6, 6.

As shown by Fig. 14, the rear arm brackets 6, 6 each is formed to show a quadrangular sectional shape having a hollow portion 35 by an outer side plate 31 on an outer side of the vehicle body (upper side in the drawing), an inner side plate 32 on an inner side of the vehicle body and a front wall 33 and a rear wall 34 connecting the two side plates 31, 32. Although Fig. 14 shows the rear arm bracket 6 on the left side of the vehicle body, an equivalent structure is adopted for the rear arm bracket 6 on the right side of the vehicle body.

Upper end portions of the rear arm brackets 6, 6 are provided with frontward extended portions 36 extended toward the tank rails 3, 4. The frontward extended portions 36 are formed with socket portions 36a fitted into openings of rear end portions of the tank rails 3, 4 at front end portions thereof and welded to the tank rails 3, 4 in a state of fitting the socket portions 36a thereto. Further, as shown by Fig. 1 and Fig. 3, the frontward extended portions 36 are formed in a shape of being connected smoothly to the rear end portions of the tank rails 3, 4 and constituted to be substantially portions of the tank rails 3, 4 in a state of welding the front end portions to the tank rails 3, 4 as mentioned above.

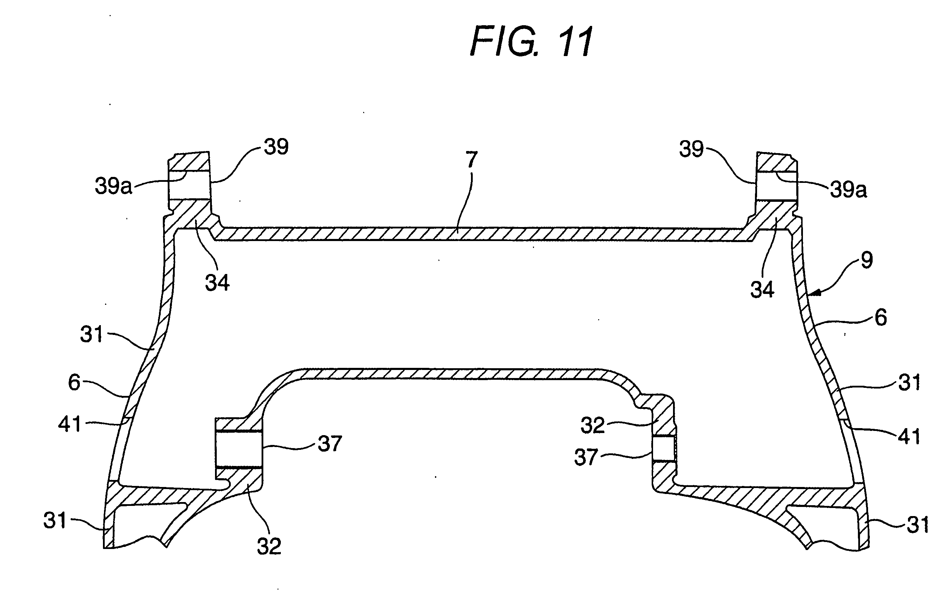

At vicinities of the frontward extended portions 36 at the upper end portions of the rear arm brackets 6, 6, attaching seats 37 (refer to Fig. 6 and Fig. 11) for attaching an upper rear portion of the engine 10 and front attaching seats 38 and rear attaching seats 39 for attaching the rear frames 11 are formed. As shown by Fig. 11, the attaching seats 37 for the engine 10 are formed at the inner side plates 32 of the rear arm brackets 6, 6. In order to insert an engine suspending bolt 40 (refer to Fig. 3) into the attaching seat 37, the bolt 40 is inserted into a through hole 41 bored at the outer side plate 31. Further, also a fastening tool is used by being inserted into the through hole 41.

The front side attaching seats 38 and the rear side attaching seats 39 of the rear frames 11 are arranged to dispose on the front side of the vehicle body and on the rear side of the vehicle body by interposing the upper cross member 7. The front side attaching seats 38 are formed on inner sides of the vehicle body of the rear brackets 6, 6 and bored with front holes 38a to penetrate upper end portions of the rear arm brackets 6, 6 in the vehicle width direction. As shown by Fig. 11, the rear attaching seats 39 are formed to project in the rear direction of the vehicle body from rear walls 34 of the rear arm brackets 6, 6 and formed with front holes 39a.

The rear frames 11 attached to the attaching seats 38, 39 are molded by a die casting method with an aluminum alloy as a material and formed such that upper side portions of end portions thereof on the front side of the vehicle body are more projected to the front direction of the vehicle body than lower side portions thereof. The projected portion is designated by notation 41a in Fig. 1. According to the rear frame 11, in a state in which the projected portion 41a is disposed on an upper side of the upper cross member 7, the front end portion of the projected portion 41a is fixed to the front attaching seat 38 and a lower portion on a base end side of the projected portion 41a is fixed to the rear attaching seat 39.

Owing to the fact that the rear frame 11 is molded by a die split in the up and down direction, a width of the rear frame 11 in the up and down direction is narrowly formed, however, by adopting the structure of attaching the front end portions and the lower portions on the base end sides of the projected portions 41a to the rear arm brackets 6, 6 as mentioned above, in view from a side direction, an interval between the attaching portions provided at two locations can be widened. Therefore, the rear frames 11 are solidly supported by the rear arm brackets 6, 6.

Further, when the rear frames 11 are attached to the rear arm brackets 6, 6, by attaching firstly the projected portions 41a to the front attaching seats 38, the projected portions 41a are supported by the upper cross member 7 and tackedly held thereby and therefore, operation of inserting the fixing bolts 13 into other attaching portions (rear attaching seats 39) can easily be carried out.

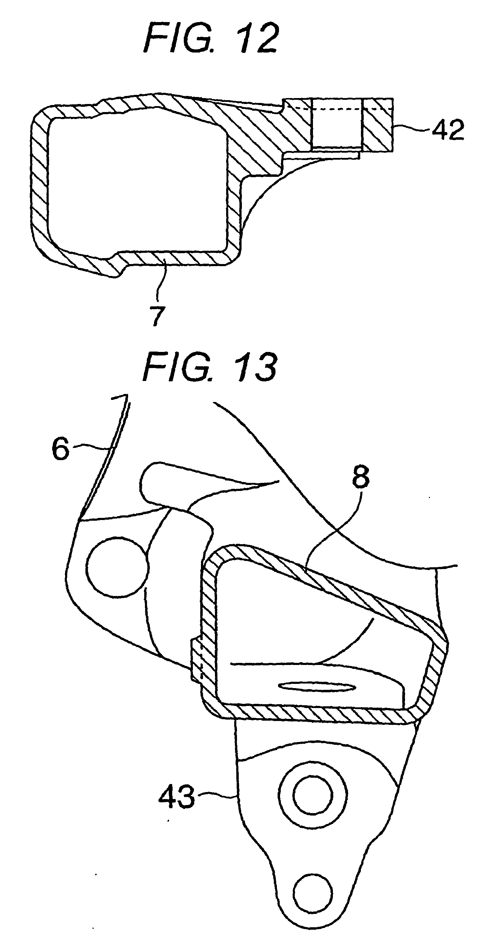

As shown by Fig. 12 and Fig. 13, the upper cross member 7 and the lower cross member 8 for connecting lower end portions of the rear arm brackets 6, 6 each is formed to show a channel-like sectional shape. As shown by Fig. 12, the upper cross member 7 is integrally formed with a rear cushion bracket 42 at a central portion in the vehicle width direction in a state of being projected to the rear direction of the vehicle body.

As shown by Fig. 6, Fig. 13, the lower cross member 8 is integrally formed with a link bracket 43 at a central portion in the vehicle width direction in a state of being projected in the lower direction. A link (not illustrated) attached to the bracket is for connecting a lower end portion of a rear cushion unit (not illustrated) an upper end portion of which is connected to the bracket 42 of the upper cross member 7 and the lower cross member 8.

As shown by Fig. 5 and Fig. 14, at central portions in the up and down direction of the rear arm brackets 6, 6, shaft holes 44 for axially supporting a rear arm supporting pivot shaft, not illustrated, are formed and at lower end portions of the rear arm brackets 6, 6, attaching seats 45 for attaching a rear lower portion of the engine 10 are formed. An engine suspending bolt 46 (refer to Fig. 3) is inserted into bolt holes 45a bored to the attaching seats 45.

The rear frames 9 according to the embodiment are molded by using a mold split in the front and rear direction of the vehicle body and in casting, a molten metal is injected from the rear side of the vehicle body to a cavity in the mold. The mold for casting the rear frames according to the embodiment is formed with gates at portions thereof in correspondence with the rear faces of the left and right rear arm brackets 6, 6 and the rear faces of the rear cushion brackets 42. The portions of constituting the gates in casting the rear frames 9 are designated by notation A in Fig. 5.

In order to produce the vehicle body 1 for a motorcycle constituted as described above, the front frame 5 and the rear frame 9 are respectively molded by casting and front end portions (frontward extended portions 36 of the rear arm brackets 6, 6) of the rear frame 9 are welded to a rear end portion (rear end portions of the tank rails 3, 4) of the front frame 5. After welding in this way, the extra portion 19 remaining in the tank rails 3, 4 is cut.

Therefore, according to the vehicle body frame 1, the upper end portions of the rear arm brackets 6, 6 are formed with the cross member 7 and need not to connect a runner portion for casting and therefore, it is not necessary to carry out finishing operation to avoid interference with the rear wheel driving chain at the portion. Therefore, while adopting the constitution of forming the vehicle body frame 1 by dividing the vehicle body frame 1 into the front frame 5 and the rear frame 9, operation after casting is simplified, a reduction in cost can be achieved and the productivity can be promoted.

Further, according to the vehicle body frame 1, the frontward extended portions 36 extended toward the tank rails 3, 4 are provided at the upper end portions of the rear arm brackets 6, 6, the front end portions of the frontward extended portion 36 are welded to the rear end portions of the tank rails 3, 4 and therefore, the rear end portions of the tank rails 3, 4 are substantially provided at the rear arm brackets 6, 6. Therefore, the front frame 5 having the tank rails 3, 4 and the rear frame 9 having the rear arm brackets 6, 6 can be formed such that total lengths thereof are substantially equal to each other. As a result, the mold for the front frame 5 and the mold for the rear frame 9 can be charged to a common casting facility to use and therefore, a single casting facility can be shared by the two molds.

Further, the lower end portions of the rear arm brackets 6, 6 are connected to each other by the cross member 8, the cross member 8 is provided with the brackets 43 connected with the link for the rear cushion unit, the cross member 7 for connecting the upper end portions of the rear arm brackets 6, 6 is provided with the bracket 42 connected with the upper end portion of the rear cushion unit and therefore, substantially all of load applied from the rear arms to the vehicle body frame 1 can be received by the rear frame 9 having the rear arm brackets 6, 6.

Furthermore, the rear end portions of the pair of left and right tank rails 3, 4 are welded to the rear arm brackets 6, 6 in a state of being connected to each other by the extra portion 19 solidified at the runner portion communicating with the gates of the casting mold and formed into the final shape by cutting the extra portion 19 after welding and therefore, the rear end portions of the front frame 5 are connected by the extra portion 19 and warping of the front frame 5 in casting can be restrained to a minimum by the extra portion 19.

In addition thereto, the vehicle body frame 1 according to the embodiment is formed with the brackets 20 for supporting a fuel tank by remaining portions of the rear end portions of the tank rails 3, 4 by cutting the extra portion 19 and therefore, the extra portion 19 can simply be cut at locations remote from the tank rails 3, 4 by lengths of the fuel tank supporting brackets 20 on inner sides of the vehicle body.

As explained above, according to the embodiment, a head pipe and a pair of left and right tank rails are integrally formed by casting, a pair of left and right rear arm brackets and a cross member for connecting upper end portions of the rear arm brackets are integrally formed by casting and front end portions of the rear arm brackets are welded to rear end portions of the tank rails, so that it is not necessary to connect the runner portion to the upper end portions of the rear arm brackets and therefore, finishing operation for avoiding interference with the rear wheel driving chain is dispensed with. Therefore, while adopting the constitution of forming the vehicle body frame by dividing the vehicle body frame into the front frame and the rear frame, operation after casting is simplified, a reduction in cost can be achieved and productivity can be promoted.

According to an embodiment, the rear end portions of the tank rails are substantially provided at the rear arm brackets and the front frame having the tank rails and the rear frame comprising the rear arm brackets can be formed such that total lengths thereof are substantially equal to each other.

Therefore, outer shape dimensions of molds for molding the two frame members become substantially equal to each other and therefore, a mold for the front frame and a mold for the rear frame can share a single casting facility. Therefore, in order to produce the vehicle body frame according to the invention, although two kinds of the molds are used, one kind of the casting facility may be used and therefore, production cost can further be reduced.

According to another embodiment, substantially all of load applied from the rear arms to the vehicle body frame can be received by the rear frame having the rear arm brackets and therefore, in comparison with, for example, a case in which lower end portions of the rear arm brackets are connected to each other by a cross member, brackets connected with links for a rear cushion unit are provided to the cross member and a bracket connected with an upper end portion of the rear cushion unit is connected to the cross member connecting the upper end portions of the rear arm brackets and, accordingly, an upper end portion of the rear cushion unit is connected to a cross member provided at the rear end portion of the front frame, load applied to a weld portion of the front frame and the rear frame can be reduced. Therefore, the vehicle body frame can solidly be formed.

According to still another embodiment, the rear end portions of the front frame are connected by the extra portion, warping of the front frame in casting is restrained to a minimum by the extra portion and therefore, accuracy of a weld bond portion can be promoted.

According to a further embodiment, the extra portion can be cut at locations remote from the tank rails by lengths of the brackets for supporting a fuel tank on an inner side of the vehicle body and operation of cutting the extra portion can be carried out in a state in which a cutting tool is not brought into contact with the tank rails. Therefore, the operation of cutting the extra portion can simply be carried out and productivity can be promoted.

According to a further embodiment of the vehicle body frame, frontward extended portions extended to the tank rails are provided at upper end portions of the rear arm brackets and front end portions of the frontward extended portions are welded to the rear end portions of the tank rails.

According to a further embodiment, the rear end portions of the pair of left and right tank rails are welded to the rear arm brackets in a state of being connected to each other by an extra portion solidified at a runner portion communicating with a gate of a casting mold and formed into a final shape by cutting the extra portion after welding.

According to a further embodiment, brackets for supporting a fuel tank are formed by remaining portions of the rear end portions of the tank rails at which the extra portion is cut. Therefore, the extra portions can be cut at locations remote from the tank rails by lengths of the brackets for supporting the fuel tank on inner sides of the vehicle body.

## Claims

1. A vehicle body frame (1) for a motorcycle comprising a head pipe (2), a pair of left and right tank rails (3,4) extended from said head pipe (2), a pair of left and right rear arm brackets (6,6), said head pipe (2) and said pair of left and right tank rails (3,4) are integrally formed by casting, and rear end portions of said tank rails (3,4) are welded to front end portions of said rear arm brackets (6,6), said pair of rear arm brackets (6,6) comprises a first cross member (7) for connecting upper end portions of said rear arm brackets (6,6) a second cross member (8) for connecting lower end portions of said rear arm brackets (6,6), said pair of rear arm brackets (6,6), said first cross member (7) and said second cross member (8) form a rear frame (9), said rear frame (9) is integrally formed by casting, wherein said pair of left and right tank rails (3,4) comprises attaching means (23,24) adapted for attaching a front portion of an engine, said upper end portions of the rear arm brackets (6,6) comprises attaching means (37) adapted for attaching an upper rear portion of an engine, and said lower end portions of the rear arm brackets (6,6) comprises attaching means (45) adapted for attaching an lower rear portion of an engine.

2. A vehicle body frame (1) according to claim 1, wherein said first cross member (7) is placed adjacent to a welding position of said rear end portions of said tank rails (3,4) and said front end portions of said rear arm brackets (6,6).

3. A vehicle body frame (1) according to claim 1 or 2, wherein said head pipe (2) and said pair of left and right tank rails (3,4) form a front frame (5), said front frame (5) further consists of plate members comprising outer and inner walls (2a,2b), outer side and inner side plates (14,15), upper and lower plates (16,17), and hole wall plates (21 a,22a), wherein said front frame (5) is integrally formed by casting.

4. A vehicle body frame (1) according to at least one of the claims 1 to 3, wherein said rear frame (9) further consists of plate members comprising outer side and inner side plates (31,32), front and rear walls (33,34).

5. A vehicle body frame (1) according to at least one of the claims 1 to 4, wherein frontward extended portions (36) extended to said tank rails (3,4) are provided at upper end portions of said rear arm brackets (6,6) and front end portions of said frontward extended portions (36) are welded to said rear end portions of said tank rails (3,4).

6. A vehicle body frame (1) according to one of the claims 1 to 5, wherein brackets (43) connected with links for a rear cushion unit are provided to said second cross member (8), and a bracket (42) connected with an upper end portion of said rear cushion unit is connected to said first cross member (7) connecting upper end portions of said rear arm brackets (6,6).

7. A vehicle body frame (1) according to at least one of the claims 1 to 6, further comprising an extra portion (19) solidified at a runner portion communicating with a gate of a casting mold and being cut at portions thereof after welding said rear frame (9) to said front frame (5) at said extra portion (19).

8. A vehicle body frame (1) according to claim 7, wherein brackets (20,20) for supporting a fuel tank are formed by remaining portions of said rear end portions of said tank rails (3,4) at which said extra portion (19) is cut.

9. A vehicle body frame (1) according to at least one of the claims 1 to 8, wherein a total length of said front frame (5) is substantially equal to a total length of said rear frame (9).

## Patentansprüche

1. Fahrzeugkarosserierahmen (1) für ein Motorrad, aufweisend ein Kopfrohr (2), ein Paar von linken und rechten Tankschienen (3, 4), die sich von dem Kopfrohr (2) erstrecken, ein Paar von linken und rechten hinteren Armhalterungen (6, 6), wobei das Kopfrohr (2) und das Paar von linken und rechten Tankschienen (3, 4) durch Gießen einstückig gebildet sind und hintere Endabschnitte der Tankschienen (3, 4) an die vorderen Endabschnitte der hinteren Armhalterungen (6, 6) geschweißt sind, wobei das Paar von hinteren Armhalterungen (6, 6) ein erstes Querteil (7) zum Verbinden oberer Endabschnitte der hinteren Armhalterungen (6, 6), ein zweites Querteil (8) zum Verbinden unterer Endabschnitte der hinteren Armhalterungen (6, 6) aufweist, wobei das Paar von hinteren Armhalterungen (6, 6), das erste Querteil (7) und das zweite Querteil (8) einen hinteren Rahmen (9) bilden, wobei der hintere Rahmen (9) durch Gießen einstückig gebildet ist, wobei das Paar von linken und rechten Tankschienen (3, 4) Befestigungsmittel (23, 24) aufweist, vorgesehen zum Verbinden eines vorderen Abschnittes einer Brennkraftmaschine, wobei die oberen Endabschnitte der hinteren Armhalterungen (6, 6) Befestigungsmittel (37) aufweist, vorgesehen zum Befestigen eines oberen hinteren Abschnittes einer Brennkraftmaschine, und die unteren Endabschnitte der hinteren Armhalterungen (6, 6) Befestigungsmittel (45) aufweisen, vorgesehen zum Befestigen eines unteren hinteren Abschnittes einer Brennkraftmaschine.

2. Fahrzeugkarosserierahmen (1) nach Anspruch 1, wobei das erste Querteil (7) benachbart zu einer Schweißposition der hinteren Endabschnitte der Tankschienen (3, 4) und der vorderen Endabschnitte der hinteren Armhalterungen (6, 6) angeordnet ist.

3. Fahrzeugkarosserierahmen (1) nach Anspruch 1 oder 2, wobei das Kopfrohr (2) und das Paar von linken und rechten Tankschienen (3, 4) einen vorderen Rahmen (5) bilden, der vordere Rahmen (5) außerdem aus Plattenteilen besteht, die äußere und innere Wände (2a, 2b), äußere und innere Seitenplatten (14, 15), obere und untere Platten (16, 17) und Lochwandplatten (21 a, 22a) aufweisen, wobei der vordere Rahmen (5) durch Gießen einstückig gebildet ist.

4. Fahrzeugkarosserierahmen (1) nach zumindest einem der Ansprüche 1 bis 3, wobei der hintere Rahmen (9) außerdem aus Plattenteilen besteht, die äußere und innere Seitenplatten (31, 32), vordere und hintere Wände (33, 34) aufweisen.

5. Fahrzeugkarosserierahmen (1) nach zumindest einem der Ansprüche 1 bis 4, wobei nach vorn erstreckte Abschnitte (36), erstreckt zu den Tankschienen (3, 4), an oberen Endabschnitten der hinteren Armhalterungen (6, 6) vorgesehen sind und vordere Endabschnitte der nach vorn erstreckten Abschnitte (36) an die hinteren Endabschnitte der Tankschienen (3, 4) angeschweißt sind.

6. Fahrzeugkarosserierahmen (1) nach einem der Ansprüche 1 bis 5, wobei Halterungen (43), verbunden mit Verbindungen für eine hintere Sitzkisseneinheit, an dem zweiten Querteil (8) vorgesehen sind und eine Halterung (42), verbunden mit einem oberen Endabschnitt der hinteren Kisseneinheit mit dem ersten Querteil (7), das obere Endabschnitte der hinteren Armhalterungen (6, 6) verbindet, verbunden ist.

7. Fahrzeugkarosserierahmen (1) nach zumindest einem der Ansprüche 1 bis 6, außerdem aufweisend einen Extraabschnitt (19), verfestigt an einem Kanalabschnitt, der mit einem Anschnitt einer Gießform in Verbindung ist und an Abschnitten desselben nach dem Schweißen des hinteren Rahmens (9) an den vorderen Rahmen (5) an dem Extraabschnitt (19) abgeschnitten ist.

8. Fahrzeugkarosserierahmen (1) nach Anspruch 7, wobei Halterungen (20, 20) zum Lagern eines Kraftstofftanks an verbleibenden Abschnitten der hinteren Endabschnitte der Tankschienen (3, 4), an denen der Extraabschnitt (19) abgeschnitten ist, gebildet sind.

9. Fahrzeugkarosserierahmen (1) nach zumindest einem der Ansprüche 1 bis 8, wobei eine Gesamtlänge des vorderen Rahmens (5) im Wesentlichen gleich zu einer Gesamtlänge des hinteren Rahmens (9) ist.

## Revendications

1. Cadre de véhicule (1) pour une motocyclette comprenant un tube de tête (2), une paire de rails de réservoir gauche et droit (3, 4) s'étendant dudit tube de tête (2), une paire de supports de bras arrière gauche et droit (6, 6), ledit tube de tête (2) et ladite paire de rails de réservoir gauche et droit (3, 4) sont intégralement formés par moulage, et des parties d'extrémité arrière desdits rails de réservoir (3, 4) sont soudées à des parties d'extrémité avant desdits supports de bras arrière (6, 6), ladite paire de supports de bras arrière (6, 6) comprend un premier élément transversal (7) pour relier les parties d'extrémité supérieure desdits supports de bras arrière (6, 6), un deuxième élément transversal (8) pour relier les parties d'extrémité inférieure desdits supports de bras arrière (6, 6), ladite paire de supports de bras arrière (6, 6), ledit premier élément transversal (7) et ledit deuxième élément transversal (8) forment un cadre arrière (9), ledit cadre arrière (9) est intégralement formé par moulage, dans lequel ladite paire de rails de réservoir gauche et droit (3, 4) comprend des moyens de fixation (23, 24) aptes à fixer une partie avant d'un moteur, lesdites parties d'extrémité supérieure des supports de bras arrière (6, 6) comprennent des moyens de fixation (37) aptes à fixer une partie arrière supérieure d'un moteur, et lesdites parties d'extrémité inférieure des supports de bras arrière (6, 6) comprennent des moyens de fixation (45) aptes à fixer une partie d'extrémité inférieure d'un moteur.

2. Cadre de véhicule (1) selon la revendication 1, dans lequel ledit premier élément transversal (7) est placé adjacent à une position de soudure desdites parties d'extrémité arrière desdits rails de réservoir (3, 4) et desdites parties d'extrémité avant desdits supports de bras arrière (6, 6).

3. Cadre de véhicule (1) selon la revendication 1 ou 2, dans lequel ledit tube de tête (2) et ladite paire de rails de réservoir gauche et droit (3, 4) forment un cadre avant (5), ledit cadre avant (5) se compose en outre d'éléments de plaque comprenant des parois extérieure et intérieure (2a, 2b), des plaques de côté extérieur et de côté intérieur (14, 15), des plaques supérieure et inférieure (16, 17), et des plaques de paroi à trou (21a, 22a), dans lequel ledit cadre avant (5) est intégralement formé par moulage.

4. Cadre de véhicule (1) selon au moins l'une des revendications 1 à 3, dans lequel ledit cadre arrière (9) se compose en outre d'éléments de plaque comprenant des plaques de côté extérieur et de côté intérieur (31, 32), et des parois avant et arrière (33, 34).

5. Cadre de véhicule (1) selon au moins l'une des revendications 1 à 4, dans lequel des parties s'étendant vers l'avant (36) s'étendant vers lesdits rails de réservoir (3, 4) sont prévues à des parties d'extrémité supérieure desdits supports de bras arrière (6, 6) et des parties d'extrémité avant desdites parties s'étendant vers l'avant (36) sont soudées aux dites parties d'extrémité arrière desdits rails de réservoir (3, 4).

6. Cadre de véhicule (1) selon l'une des revendications 1 à 5, dans lequel des supports (43) reliés à des liaisons pour une unité d'amortissement arrière sont prévus audit deuxième élément transversal (8), et un support (42) relié à une partie d'extrémité supérieure de ladite unité d'amortissement arrière est relié audit premier élément transversal (7) reliant des parties d'extrémité supérieure desdits supports de bras arrière (6, 6).

7. Cadre de véhicule (1) selon au moins l'une des revendications 1 à 6, comprenant en outre une partie supplémentaire (19) solidifiée à une partie de coulisseau communiquant avec une porte d'un moule et étant découpée à des parties de celle-ci après la soudure dudit cadre arrière (9) sur ledit cadre avant (5) à ladite partie supplémentaire (19).

8. Cadre de véhicule (1) selon la revendication 7, dans lequel des supports (20, 20) pour supporter un réservoir de carburant sont formés par des parties restantes desdites parties d'extrémité arrière desdits rails de réservoir (3, 4) auxquelles ladite partie supplémentaire (19) est découpée.

9. Cadre de véhicule (1) selon au moins l'une des revendications 1 à 8, dans lequel une longueur totale dudit cadre avant (5) est sensiblement égale à une longueur totale dudit cadre arrière (9).
